# EUROPEAN PATENT SPECIFICATION

(11) **EP 3 110 219 B1**
(45) Date of publication and mention of the grant of the patent: **13.05.2020**
(21) Application number: 14887540.4
(22) Date of filing: 24.03.2014
(51) Int. Cl.: H04W 72/04, H04L 25/02, H04L 5/00

(54) **METHOD AND APPARATUS FOR CHANNEL ESTIMATION PROCESSING**
VERFAHREN UND VORRICHTUNG ZUR KANALSCHÄTZUNGSVERARBEITUNG
PROCÉDÉ ET APPAREIL DE TRAITEMENT D'ESTIMATION DE CANAL

(43) Date of publication of application: 28.12.2016
(73) Proprietor: Huawei Technologies Co., Ltd., Longgang District Shenzhen, Guangdong 518129 (CN)
(72) Inventor: RONG, Lu, Shenzhen Guangdong 518129 (CN); YU, Rongdao, Shenzhen Guangdong 518129 (CN); ZENG, Guangzhu, Shenzhen Guangdong 518129 (CN)
(74) Representative: Epping - Hermann - Fischer
(86) International application number: PCT/CN2014/073937
(87) International publication number: WO 2015/143598

(56) References cited:
- WO-A1-2011/088403
- WO-A1-2013/044870
- WO-A1-2013/066232
- CN-A- 1 921 463
- CN-A- 103 457 647
- US-A1- 2013 201 840

## Description

### TECHNICAL FIELD

The present invention relates to the communications technologies, and in particular, relates to a channel estimation processing method and an apparatus.

### BACKGROUND

In a Long Term Evolution (LTE, Long Term Evolution) system, a base station needs to send a cell-specific reference signal (CRS, Cell-specific Reference Signal) to a terminal, and the terminal may perform channel estimation on a downlink by using the CRS.

To improve radio signal coverage of a base station, a sector bias system is used in the prior art. In the sector bias system, the base station needs to send a signal to a terminal by using a corresponding antenna port of each sector. To enable a channel estimation result to match a to-be demodulated signal, a CRS also needs to be sent by using a same antenna port as that used for sending the to-be demodulated signal. Two antenna ports are used as an example for description. Frequency domain resources may be equally divided into two parts correspondingly. That is, R resource blocks (RB, Resource Block) are equally divided into two parts: each part includes R/2 RBs, one part of RBs is allocated to one antenna port, and the other part of RBs is allocated to the other antenna port. Therefore, the base station may send, to the terminal by using corresponding antenna ports, CRSs carried by the two parts of RBs. Correspondingly, the terminal receives the CRSs from the two antenna port directions of the base station, and performs channel estimation on the received CRSs by means of a channel interpolation filter, so as to obtain a channel estimation result.

However, a relatively great estimation error frequently occurs in a channel estimation result obtained in the prior art, resulting in a mistake in subsequent reception and demodulation of a signal.

WO 2011/088403 A1 relates to a method for wireless communication, comprising: determining at least one bandwidth part configured for a user equipment (UE), each bandwidth part covering at least one subband among a plurality of subbands; receiving a first reference signal from a cell; receiving a second reference signal from the cell, the second reference signal being transmitted less frequently than the first reference signal by the cell; and determining channel feedback information for the at least one bandwidth part based on the second reference signal. WO 2013/044870 A1 relates to a method for allocating resources in a wireless network, the method comprising: transmitting a control channel in a resource block (RB) or RB-pair, the control channel comprising a first control channel element that is associated with a first antenna port and a second control channel element that is associated with a second antenna port, wherein the first antenna port is pre-assigned a first reference signal and the second antenna port is pre-assigned a second reference signal; selecting one of the first reference signal and the second reference signal; and transmitting the selected reference signal in the RB or RB-pair, wherein the selected reference signal is transmitted to enable channel estimation for both the first control channel element and the second control channel element at a receiver side.

US 2013/201840 A1 relates to a method for channel estimation in a wireless device. According to the method, the wireless device obtains an indication that a set of antenna ports, or antenna port types, share at least one channel property. The wireless device then estimates one or more of the shared channel properties based at least on a first reference signal received from a first antenna port included in the set, or having a type corresponding to one of the types in the set. Furthermore, the wireless device performs channel estimation based on a second reference signal received from a second antenna port included in the set, or having a type corresponding to one of the types in the set, wherein the channel estimation is performed using at least the estimated channel properties.

### SUMMARY

Embodiments of the present invention are defined by the claims.

According to the channel estimation processing method and the apparatus provided in the embodiments, independent channel estimation is performed in each of at least two frequency band groups according to CRSs, which resolves a prior-art problem that a great estimation deviation of a frequency response estimation value of a non-CRS subcarrier that is located at a boundary of frequency band groups when overall estimation is used is caused because an amplitude and a phase of a frequency response estimation value of a subcarrier on which a CRS is located change at the boundary of the frequency band groups, thereby improving accuracy of channel estimation.

### BRIEF DESCRIPTION OF DRAWINGS

FIG. 1 is a flowchart of Embodiment 1 of a channel estimation processing method according to the present invention;
FIG. 2 is a schematic structural diagram of a frequency band group according to an embodiment of the present invention;
FIG. 3 is a flowchart of Embodiment 3 of a channel estimation processing method according to the present invention;
FIG. 4 is a schematic structural diagram of Embodiment 1 of a terminal according to the present invention; and
FIG. 5 is a schematic structural diagram of Embodiment 1 of a base station according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

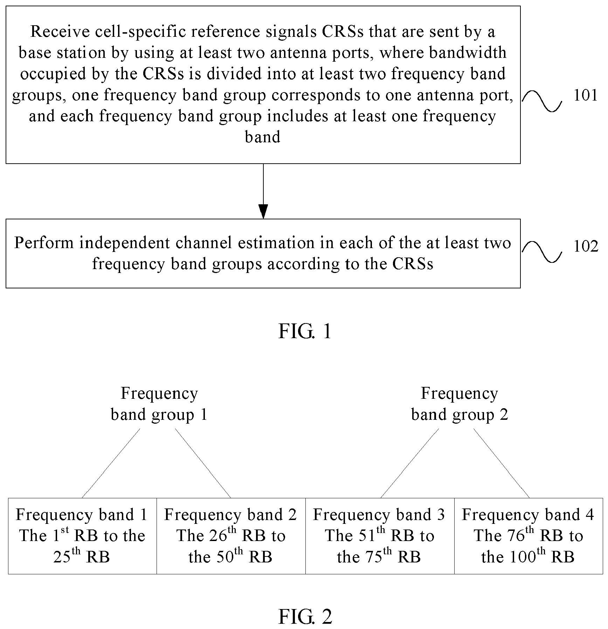

FIG. 1 is a flowchart of Embodiment 1 of a channel estimation processing method according to the present invention. As shown in FIG. 1, the method in this embodiment may include the following steps:
Step 101: Receive cell-specific reference signals CRSs that are sent by a base station by using at least two antenna ports, where bandwidth occupied by the CRSs is divided into at least two frequency band groups, one frequency band group corresponds to one antenna port, and each frequency band group includes at least one frequency band.

The bandwidth occupied by the CRSs is transmission bandwidth.

FIG. 2 is a schematic structural diagram of a frequency band group according to an embodiment of the present invention. As shown in FIG. 2, a system with transmission bandwidth of 100 RBs is equally divided into four frequency bands. The four frequency bands belong to two frequency band groups, where a frequency band 1 includes the 1^{st} RB to the 25^{th} RB, a frequency band 2 includes the 26^{th} RB to the 50^{th} RB, a frequency band 3 includes the 51^{st} RB to the 75^{th} RB, a frequency band 4 includes the 76^{th} RB to the 100^{th} RB, a frequency band group 1 includes the frequency band 1 and the frequency band 2, and a frequency band group 2 includes the frequency band 3 and the frequency band 4. It can be learned that the frequency bands included in the frequency band groups are all full frequency bands.

When the bandwidth occupied by the CRSs is divided into two frequency band groups, the base station sends the CRSs on the two frequency band groups corresponding to two antenna ports. Step 102: Perform independent channel estimation in each of the at least two frequency band groups according to the CRSs.

Frequency band group information may be determined in a pre-agreed manner. For example, bandwidth occupied by a CRS is divided into three frequency band groups by default, and system transmission bandwidth is equally divided into three parts by default to obtain three frequency band groups.

Optionally, the performing independent channel estimation in each of the at least two frequency band groups includes: when the frequency band group includes two or more frequency bands, performing independent channel estimation in each frequency band of the frequency band group, or performing joint channel estimation in each frequency band of the frequency band group.

In the prior art, a terminal performs entire channel estimation on bandwidth occupied by a CRS, that is, performs interpolation on channel estimation results of CRS subcarriers between adjacent frequency band groups, to complete channel estimation for a non-CRS subcarrier at a boundary of the adjacent frequency band groups. In the present invention, a terminal performs independent channel estimation in each frequency band group.

In a sector bias system, because CRS signals transmitted by using different antenna ports have different amplitudes and phases when arriving at a terminal, an amplitude value and a phase of a frequency response estimation value of a subcarrier on which a CRS is located change at a boundary of frequency band groups. A method is used in the prior art: Interpolation is performed on frequency response estimation values of subcarriers on which two or more CRSs of each frequency band group of different antenna ports are located, to calculate a frequency response estimation value of a non-CRS subcarrier that is located at a boundary of frequency band groups. This method may cause a quite great estimation deviation. By using the method in which independent channel estimation is performed in each frequency band group in the present invention, a problem that a great estimation deviation of a frequency response estimation value of a non-CRS subcarrier that is located at a boundary of frequency band groups when overall estimation is used is caused because an amplitude and a phase of a frequency response estimation value of a subcarrier on which a CRS is located change at the boundary of the frequency band groups is avoided, thereby improving accuracy of channel estimation. According to this embodiment, independent channel estimation is performed in each frequency band group, which resolves a prior-art problem that a great estimation deviation of a frequency response estimation value of a non-CRS subcarrier that is located at a boundary of frequency band groups when overall estimation is used is caused because an amplitude and a phase of a frequency response estimation value of a subcarrier on which a CRS is located change at the boundary of the frequency band groups, thereby improving accuracy of channel estimation.

### Embodiment 2 of a Channel Estimation Processing Method

The method in this embodiment may include:
sending cell-specific reference signals CRSs to a terminal by using at least two antenna ports, so that the terminal performs independent channel estimation in each of at least two frequency band groups, where bandwidth occupied by the CRSs is divided into the at least two frequency band groups, one frequency band group corresponds to one antenna port, and each frequency band group includes at least one frequency band.

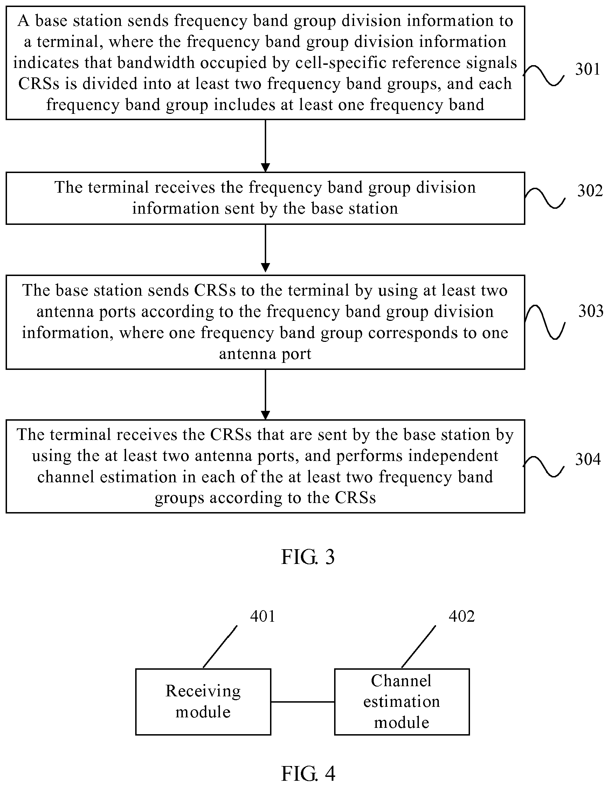

According to this embodiment, CRSs are sent to a terminal by using at least two antenna ports, so that the terminal performs independent channel estimation in each of at least two frequency band groups, which resolves a prior-art problem that a great estimation deviation of a frequency response estimation value of a non-CRS subcarrier that is located at a boundary of frequency band groups when overall estimation is used is caused because an amplitude and a phase of a frequency response estimation value of a subcarrier on which a CRS is located change at the boundary of the frequency band groups, thereby improving accuracy of channel estimation. FIG. 3 is a flowchart of Embodiment 3 of a channel estimation processing method according to the present invention. As shown in FIG. 3, the method in this embodiment may include the following steps:
Step 301: Abase station sends frequency band group division information to a terminal, where the frequency band group division information indicates that bandwidth occupied by cell-specific reference signals CRSs is divided into at least two frequency band groups, and each frequency band group includes at least one frequency band.

The frequency band group division information may include: a quantity of frequency band group and frequency band information that corresponds to each frequency band group. Optionally, the frequency band may include N sub-bands, where N is a positive integer. A relationship between a sub-band and system transmission bandwidth is shown in Table 1.

**Table 1**

| Transmission bandwidth (unit: RB) | Size of a sub-band (unit: RB) |
|---|---|
| < 10 | 4 |
| 11 - 26 | 4 |
| 27 - 63 | 6 |
| 64 - 110 | 8 |

For example, when system transmission bandwidth is 50 RBs, a size of each sub-band is six RBs (except the last sub-band). When a bandwidth of 50 RBs occupied by a CRS is divided into two frequency bands, a boundary for frequency band division may be located between the 24^{th} RB and the 25^{th} RB. A first frequency band consists of four full sub-bands, and a second frequency band consists of five full sub-bands (a size of the last sub-band is two RBs).

In an LTE system, to improve a capacity by using closed-loop multiple-input multiple-output (Multiple-Input Multiple-Output, MIMO), a terminal needs to feed back a precoding matrix indicator (Precoding Matrix Indicator, PMI) to a base station. To control a feedback overhead, the PMI is fed back with a sub-band as a basic granularity. In a sub-band, based on a frequency domain response estimation value of each subcarrier in the sub-band, the terminal obtains a sub-band PM. Because amplitude values and phases of frequency domain response estimation values of subcarriers change at a boundary of frequency band groups of different antenna ports, an amplitude value and a phase of a frequency domain response estimation value of a subcarrier in the sub-band change at the boundary of the frequency band groups, thereby causing inaccuracy of sub-band PMI feedback and reducing data transmission performance of a physical downlink shared channel (PDSCH, Physical Downlink Shared Channel). In the present invention, frequency band division is performed with a sub-band as a unit, which avoids an amplitude value change and a phase change of a frequency domain response estimation value of a subcarrier in a sub-band and improves accuracy of sub-band PMI feedback. Optionally, the frequency band group division information may be sent on a broadcast channel (Broadcast Channel, BCH) carried by a physical broadcast channel (Physical Broadcast Channel, PBCH).

Optionally, when the frequency band group division information is sent by using the PBCH channel to the terminal, RBs occupied by the PBCH are divided into a same frequency band group during frequency band group division.

A CRS is a reference signal for demodulating a PBCH in a system, and therefore, RBs occupied by the PBCH are divided into a same frequency band group during frequency band group division, which can ensure that before a terminal acquires frequency band group division information, accuracy of the frequency band group division information acquired by the terminal can be improved when a frequency response estimation value that is obtained by means of estimation by using an existing channel estimation method is used to perform PBCH channel demodulation.

Step 302: The terminal receives the frequency band group division information sent by the base station.

Specifically, the terminal demodulates the PBCH channel by means of blind detection to obtain carried BCH channel information by means of demodulation, so as to obtain the frequency band group division information carried in notification signaling on the BCH channel.

Step 303: The base station sends CRSs to the terminal by using at least two antenna ports according to the frequency band group division information, where one frequency band group corresponds to one antenna port.

One antenna port may correspond to a set of antennas or correspond to one antenna beam, where multiple sets of antennas may form one antenna beam by using a precoding rule. Optionally, the frequency band group corresponding to one antenna port may be continuous frequency band resources or non-continuous frequency band resources.

An LTE system with system transmission bandwidth of 100 RBs is used as an example. The 100 RBs are equally divided into four frequency bands, and each frequency band includes 25 RBs, where a frequency band 1 includes the 1^{st} RB to the 25^{th} RB, a frequency band 2 includes the 26^{th} RB to the 50^{th} RB, a frequency band 3 includes the 51^{st} RB to the 75^{th} RB, and a frequency band 4 includes the 76^{th} RB to the 100^{th} RB. When bandwidth occupied by a CRS (that is the 100 RBs) is divided into two frequency band groups, that the frequency band group corresponding to one antenna port is continuous frequency band resources may be as follows: a frequency band group corresponding to an antenna port 1 includes the frequency band 1 and the frequency band 2, and a frequency band group corresponding to an antenna port 2 includes the frequency band 3 and the frequency band 4; that the frequency band group corresponding to one antenna port is non-continuous frequency band resources may be as follows: a frequency band group corresponding to an antenna port 1 includes the frequency band 1 and the frequency band 3, and a frequency band group corresponding to an antenna port 2 includes the frequency band 2 and the frequency band 4.

It needs to be noted that there is no sequence between step 303 and step 302.

Step 304: The terminal receives the CRSs that are sent by the base station by using the at least two antenna ports, and performs independent channel estimation in each of the at least two frequency band groups according to the CRSs.

The performing independent channel estimation in each of the at least two frequency band groups includes: performing channel interpolation in each of the at least two frequency band groups.

Specifically, the performing channel interpolation in each frequency band group may be as follows: when channel estimation is performed on a non-CRS subcarrier by interpolating subcarriers on which CRSs are located, a channel estimation value of a subcarrier, on which a CRS is located, in a same frequency band group is used to perform interpolation and estimation on a non-CRS subcarrier in the same frequency band group.

A CRS is a reference signal for demodulating a PBCH, a physical downlink control channel (PDCCH, Physical Downlink Control Channel), a physical control format indicator channel (PCFICH, Physical Control Format Indicator Channel), and a physical HARQ indicator channel (PHICH, Physical Hybrid ARQ Indicator Channel) in a system. Therefore, a deviation of a frequency domain estimation value of a subcarrier may cause an error of detection on the PBCH, PDCCH, PCFICH and PHICH. According to the method in which independent channel estimation is performed in each frequency band group in the present invention, accuracy of channel estimation is improved, thereby resolving a problem of the error of detection on the PBCH, PDCCH, PCFICH and PHICH.

According to this embodiment, frequency band division is performed with a sub-band as a unit, which resolves a problem of inaccuracy in sub-band PMI feedback in the prior art and improves PDSCH data transmission performance. In addition, independent channel estimation is performed in each frequency band group, which resolves a problem of an error of detection on a PBCH, PDCCH, PCFICH, and PHICH.

FIG. 4 is a schematic structural diagram of Embodiment 1 of a terminal according to the present invention. As shown in FIG. 4, a user device terminal in this embodiment may include: a receiving module 401 and a channel estimation module 402. The receiving module 401 is configured to receive cell-specific reference signals CRSs that are sent by a base station by using at least two antenna ports, where bandwidth occupied by the CRSs is divided into at least two frequency band groups, one frequency band group corresponds to one antenna port, and each frequency band group includes at least one frequency band. The channel estimation module 402 is configured to perform, according to the CRSs received by the receiving module 401, independent channel estimation in each of the at least two frequency band groups by using the CRSs, where the frequency band group includes at least one frequency band.

The terminal in this embodiment may be configured to execute the technical solution of the method embodiment shown in FIG. 1, implementation principles and technical effects thereof are similar, and details are not described herein.

### Embodiment 2 of a Terminal

On a basis of Embodiment 1 of the terminal shown in FIG. 4, further, the receiving module 401 is further configured to receive frequency band group division information sent by the base station, where the frequency band group division information indicates that the bandwidth occupied by the CRSs is divided into the at least two frequency band groups, so that the channel estimation module performs independent channel estimation in each of the at least two frequency band groups according to the frequency band group division information.

The user device terminal in this embodiment may be configured to execute the technical solution of a terminal in the method embodiment shown in FIG. 3, implementation principles and technical effects thereof are similar, and details are not described herein.

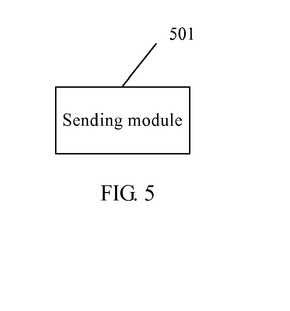

FIG. 5 is a schematic structural diagram of Embodiment 1 of a base station according to the present invention. As shown in FIG. 5, the base station in this embodiment may include a sending module 501. The sending module 501 is configured to send cell-specific reference signals CRSs to a terminal by using at least two antenna ports, so that the terminal performs independent channel estimation in each of at least two frequency band groups.

Bandwidth occupied by the CRSs is divided into the at least two frequency band groups, one frequency band group corresponds to one antenna port, and each frequency band group includes at least one frequency band.

The base station in this embodiment may be configured to execute the technical solution of Embodiment 2 of the channel estimation processing method, implementation principles and technical effects thereof are similar, and details are not described herein.

### Embodiment 2 of a Base Station

On a basis of Embodiment 1 of the base station shown in FIG. 5, further, the sending module 501 is further configured to send frequency band group division information to the terminal, where the frequency band group division information indicates that the bandwidth occupied by the cell-specific reference signals CRSs is divided into the at least two frequency band groups, so that the terminal performs independent channel estimation in each of the at least two frequency band groups according to the frequency band group division information.

The base station in this embodiment may be configured to execute the technical solution of the base station in the method embodiment shown in FIG. 3, implementation principles and technical effects thereof are similar, and details are not described herein.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but are not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions in the embodiments of the present invention, as defined in the appended claims.

## Claims

1. A channel estimation processing method, comprising:
receiving (101) cell-specific reference signals, CRSs, that are sent by a base station by using at least two antenna ports, wherein bandwidth occupied by the CRSs is divided into at least two frequency band groups, one frequency band group corresponds to one antenna port, and each frequency band group comprises at least one frequency band; and
separately performing (102) independent channel estimation in each of the at least two frequency band groups according to the CRSs, wherein the separately performing (102) independent channel estimation in each of the at least two frequency band groups comprises:
performing channel interpolation in each of the at least two frequency band groups, wherein the performing channel interpolation in each of the at least two frequency band groups comprises: when channel estimation is performed on a non-CRS subcarrier by interpolating subcarriers on which the CRSs are located, a channel estimation value of a subcarrier, on which a CRS is located, in a same frequency band group is used to perform interpolation and estimation on a non-CRS subcarrier in the same frequency band group, wherein before the receiving CRSs that are sent by a base station by using at least two antenna ports, further comprising:
receiving frequency band group division information sent by the base station, wherein the frequency band group division information indicates that the bandwidth occupied by the CRSs is divided into the at least two frequency band groups; and
the separately performing independent channel estimation in each of the at least two frequency band groups comprises:
separately performing independent channel estimation in each of the at least two frequency band groups according to the frequency band group division information.

2. The method according to claim 1, wherein the frequency band group division information is carried on a physical broadcast channel, PBCH, and resource blocks, RB, occupied by the PBCH are divided into a same frequency band group during frequency band group division.

3. The method according to any one of claims 1 to 2, wherein the frequency band comprises N sub-bands, wherein N is a positive integer.

4. A channel estimation processing method, comprising:
sending cell-specific reference signals, CRSs, to a terminal by using at least two antenna ports, so that the terminal separately performs independent channel estimation in each of at least two frequency band groups, wherein
bandwidth occupied by the CRSs is divided into the at least two frequency band groups, one frequency band group corresponds to one antenna port, and each frequency band group comprises at least one frequency band, and before the sending cell-specific reference signals CRSs to a terminal by using at least two antenna ports, further comprising:
sending frequency band group division information to the terminal, wherein the frequency band group division information indicates that the bandwidth occupied by the cell-specific reference signals CRSs is divided into the at least two frequency band groups, so that the terminal separately performs independent channel estimation in each of the at least two frequency band groups according to the frequency band group division information.

5. The method according to claim 4, wherein the frequency band group division information is carried on a physical broadcast channel PBCH, and resource blocks, RB, occupied by the PBCH are divided into a same frequency band group during frequency band group division.

6. The method according to any one of claims 4 to 5, wherein the frequency band comprises N sub-bands, wherein N is a positive integer.

7. A terminal, comprising:
a receiving module (401), configured to receive cell-specific reference signals, CRSs, that are sent by a base station by using at least two antenna ports, wherein bandwidth occupied by the CRSs is divided into at least two frequency band groups, one frequency band group corresponds to one antenna port, and each frequency band group comprises at least one frequency band; and
a channel estimation module (402), configured to separately perform independent channel estimation in each of the at least two frequency band groups according to the CRSs received by the receiving module, wherein the channel estimation module (402) is further configured to perform channel interpolation in each of the at least two frequency band groups, wherein the performing channel interpolation in each of the at least two frequency band groups comprises: when channel estimation is performed on a non-CRS subcarrier by interpolating subcarriers on which the CRSs are located, a channel estimation value of a subcarrier, on which a CRS is located, in a same frequency band group is used to perform interpolation and estimation on a non-CRS subcarrier in the same frequency band group, wherein the receiving module (401) is further configured to:
receive frequency band group division information sent by the base station, wherein the frequency band group division information indicates that the bandwidth occupied by the CRSs is divided into the at least two frequency band groups, so that the channel estimation module separately performs independent channel estimation in each of the at least two frequency band groups according to the frequency band group division information.

8. The terminal according to claim 7, wherein the frequency band group division information is carried on a physical broadcast channel PBCH, and resource blocks, RB, occupied by the PBCH are divided into a same frequency band group during frequency band division.

9. The terminal according to any one of claims 7 to 8, wherein the frequency band comprises N sub-bands, wherein N is a positive integer.

10. Abase station, comprising:
a sending module (501), configured to send cell-specific reference signals CRSs to a terminal by using at least two antenna ports, so that the terminal separately performs independent channel estimation in each of at least two frequency band groups, wherein
bandwidth occupied by the CRSs is divided into the at least two frequency band groups, one frequency band group corresponds to one antenna port, and each frequency band group comprises at least one frequency band, wherein the sending module (501) is further configured to:
send frequency band group division information to the terminal, wherein the frequency band group division information indicates that the bandwidth occupied by the cell-specific reference signals CRSs is divided into the at least two frequency band groups, so that the terminal separately performs independent channel estimation in each of the at least two frequency band groups according to the frequency band group division information.

11. The base station according to claim 10, wherein the frequency band group division information is carried on a physical broadcast channel PBCH, and resource blocks, RB, occupied by the PBCH are divided into a same frequency band group during frequency band group division.

12. The base station according to any one of claims 10 to 11, wherein the frequency band comprises N sub-bands, wherein N is a positive integer.

## Patentansprüche

1. Verfahren zur Kanalschätzungsverarbeitung, umfassend:
Empfangen (101) von zellspezifischen Referenzsignalen, CRSs, die von einer Basisstation durch Verwenden von mindestes zwei Antennenanschlüssen gesendet werden, wobei Bandbreite, die von den CRSs belegt wird, in mindestens zwei Frequenzbandgruppen geteilt wird, wobei eine Frequenzbandgruppe einem Antennenanschluss entspricht, und jede Frequenzbandgruppe mindestens ein Frequenzband umfasst; und
getrenntes Durchführen (102) von unabhängiger Kanalschätzung in jeder der mindestens zwei Frequenzbandgruppen gemäß den CRSs, wobei das getrennte Durchführen (102) von unabhängiger Kanalschätzung in jeder der mindestens zwei Frequenzbandgruppen umfasst:
Durchführen von Kanalinterpolation in jeder der mindestens zwei Frequenzbandgruppen, wobei das Durchführen von Kanalinterpolation in jeder der mindestens zwei Frequenzbandgruppen umfasst, dass: wenn Kanalschätzung an einem Nicht-CRS-Unterträger durch Interpolieren von Unterträgern, auf welchen sich die CRSs befinden, durchgeführt wird, ein Kanalschätzwert eines Unterträgers, auf welchem sich ein CRS befindet, in einer gleichen Frequenzbandgruppe zum Durchführen von Interpolation und Schätzung an einem Nicht-CRS-Unterträger in der gleichen Frequenzbandgruppe verwendet wird, wobei ferner umfassend vor dem Empfangen von CRSs, die von der Basisstation durch Verwenden von mindestens zwei Antennenanschlüssen gesendet werden:
Empfangen von Informationen über Frequenzbandgruppenteilung, die von der Basisstation gesendet werden, wobei die Informationen über Frequenzbandgruppenteilung angeben, dass die von den CRSs belegte Bandbreite in die mindestens zwei Frequenzbandgruppen geteilt ist; und
wobei das getrennte Durchführen von unabhängiger Kanalschätzung in jeder der mindestens zwei Frequenzbandgruppen umfasst:
getrenntes Durchführen von unabhängiger Kanalschätzung in jeder der mindestens zwei Frequenzbandgruppen Information gemäß den Informationen über Frequenzbandgruppenteilung.

2. Verfahren nach Anspruch 1, wobei die Informationen über Frequenzbandgruppenteilung auf einem physikalischen Broadcast-Kanal, PBCH, übertragen werden, und Ressourcenblöcke, RB, die vom PBCH belegt werden, bei Frequenzbandgruppenteilung in eine gleiche Frequenzbandgruppe eingeteilt werden.

3. Verfahren nach einem der Ansprüche 1 bis 2, wobei das Frequenzband N Teilbänder umfasst, wobei N eine positive ganze Zahl ist.

4. Verfahren zur Kanalschätzungsverarbeitung, umfassend:
Senden von zellspezifischen Referenzsignalen, CRSs, durch Verwenden von mindestens zwei Antennenanschlüssen an ein Endgerät, so dass das Endgerät unabhängige Kanalschätzung in jeder von mindestens zwei Frequenzbandgruppen getrennt durchführt, wobei
Bandbreite, die von den CRSs belegt wird, in die mindestens zwei Frequenzbandgruppen geteilt wird, wobei eine Frequenzbandgruppe einem Antennenanschluss entspricht, und jede Frequenzbandgruppe mindestens ein Frequenzband umfasst, und ferner umfassend vor dem Senden der zellspezifischen Referenzsignale, CRSs, durch Verwenden von mindestens zwei Antennenanschlüssen an ein Endgerät:
Senden von Informationen über Frequenzbandgruppenteilung an das Endgerät, wobei die Informationen über Frequenzbandgruppenteilung angeben, dass die von den zellspezifischen Referenzsignalen, CRSs, belegte Bandbreite in mindestens zwei Frequenzbandgruppen geteilt ist, so dass das Endgerät unabhängige Kanalschätzung in jeder der mindestens zwei Frequenzbandgruppen gemäß den Informationen über Frequenzbandgruppenteilung getrennt durchführt.

5. Verfahren nach Anspruch 4, wobei die Informationen über Frequenzbandgruppenteilung auf einem physikalischen Broadcast-Kanal, PBCH, übertragen werden, und Ressourcenblöcke, RB, die vom PBCH belegt werden, bei Frequenzbandgruppenteilung in eine gleiche Frequenzbandgruppe eingeteilt werden.

6. Verfahren nach einem der Ansprüche 4 bis 5, wobei das Frequenzband N Teilbänder umfasst, wobei N eine positive ganze Zahl ist.

7. Endgerät, umfassend:
ein Empfangsmodul (401), das so konfiguriert ist, dass es zellspezifische Referenzsignale, CRSs, empfängt, die von einer Basisstation durch Verwenden von mindestes zwei Antennenanschlüssen gesendet werden, wobei Bandbreite, die von den CRSs belegt wird, in mindestens zwei Frequenzbandgruppen geteilt wird, wobei eine Frequenzbandgruppe einem Antennenanschluss entspricht, und jede Frequenzbandgruppe mindestens ein Frequenzband umfasst; und
ein Kanalschätzmodul (402), das zum getrennten Durchführen von unabhängiger Kanalschätzung in jeder der mindestens zwei Frequenzbandgruppen gemäß den durch das Empfangsmodul empfangenen CRSs konfiguriert ist, wobei das Kanalschätzmodul (402) ferner zum Durchführen von Kanalinterpolation in jeder der mindestens zwei Frequenzbandgruppen konfiguriert ist, wobei das Durchführen von Kanalinterpolation in jeder der mindestens zwei Frequenzbandgruppen umfasst, dass: wenn Kanalschätzung an einem Nicht-CRS-Unterträger durch Interpolieren von Unterträgern, auf welchen sich die CRSs befinden, durchgeführt wird, ein Kanalschätzwert eines Unterträgers, auf welchem sich ein CRS befindet, in einer gleichen Frequenzbandgruppe zum Durchführen von Interpolation und Schätzung an einem Nicht-CRS-Unterträger in der gleichen Frequenzbandgruppe verwendet wird, wobei das Empfangsmodul (401) ferner konfiguriert ist zum:
Empfangen von Informationen über Frequenzbandgruppenteilung, die von der Basisstation gesendet werden, wobei die Informationen über Frequenzbandgruppenteilung angeben, dass die von CRSs den belegte Bandbreite in mindestens zwei Frequenzbandgruppen geteilt ist, so dass das Kanalschätzmodul unabhängige Kanalschätzung in jeder der mindestens zwei Frequenzbandgruppen gemäß den Informationen über Frequenzbandgruppenteilung getrennt durchführt.

8. Endgerät nach Anspruch 7, wobei die Informationen über Frequenzbandgruppenteilung auf einem physikalischen Broadcast-Kanal, PBCH, übertragen werden, und Ressourcenblöcke, RB, die vom PBCH belegt werden, bei Frequenzbandgruppenteilung in eine gleiche Frequenzbandgruppe eingeteilt werden.

9. Endgerät nach einem der Ansprüche 7 bis 8, wobei das Frequenzband N Teilbänder umfasst, wobei N eine positive ganze Zahl ist.

10. Basisstation, umfassend:
ein Sendemodul (501), das zum Senden von zellspezifischen Referenzsignalen, CRSs, durch Verwenden von mindestens zwei Antennenanschlüssen an ein Endgerät konfiguriert ist, so dass das Endgerät unabhängige Kanalschätzung in jeder von mindestens zwei Frequenzbandgruppen getrennt durchführt, wobei Bandbreite, die von den CRSs belegt wird, in die mindestens zwei Frequenzbandgruppen geteilt wird, wobei eine Frequenzbandgruppe einem Antennenanschluss entspricht, und jede Frequenzbandgruppe mindestens ein Frequenzband umfasst, wobei das Sendemodul (501) ferner konfiguriert ist zum:
Senden von Informationen über Frequenzbandgruppenteilung an das Endgerät, wobei die Informationen über Frequenzbandgruppenteilung angeben, dass die von den zellspezifischen Referenzsignalen, CRSs, belegte Bandbreite in mindestens zwei Frequenzbandgruppen geteilt ist, so dass das Endgerät unabhängige Kanalschätzung in jeder der mindestens zwei Frequenzbandgruppen gemäß den Informationen über Frequenzbandgruppenteilung getrennt durchführt.

11. Basisstation nach Anspruch 10, wobei die Informationen über Frequenzbandgruppenteilung auf einem physikalischen Broadcast-Kanal, PBCH, übertragen werden, und Ressourcenblöcke, RB, die vom PBCH belegt werden, bei Frequenzbandgruppenteilung in eine gleiche Frequenzbandgruppe eingeteilt werden.

12. Basisstation nach einem der Ansprüche 10 bis 11, wobei das Frequenzband N Teilbänder umfasst, wobei N eine positive ganze Zahl ist.

## Revendications

1. Procédé de traitement d'estimation de canal, comprenant de :
recevoir (101) des signaux de référence spécifiques aux cellules, CRS, qui sont envoyés par une station de base en utilisant au moins deux ports d'antenne, dans lequel la largeur de bande occupée par les CRS est divisée en au moins deux groupes de bandes de fréquences, un groupe de bandes de fréquences correspond à un port d'antenne, et chaque groupe de bandes de fréquences comprend au moins une bande de fréquences ; et
effectuer séparément (102) une estimation de canal indépendante dans chacun des au moins deux groupes de bandes de fréquences en fonction des CRS, dans lequel l'exécution séparément (102) d'une estimation de canal indépendante dans chacun des au moins deux groupes de bandes de fréquences comprend de :
effectuer une interpolation de canal dans chacun des au moins deux groupes de bandes de fréquences, dans lequel l'exécution de l'interpolation de canal dans chacun des au moins deux groupes de bandes de fréquences comprend de : lorsque l'estimation de canal est effectuée sur une sous-porteuse non-CRS en interpolant des sous-porteuses sur lesquelles les CRS sont situés, une valeur d'estimation de canal d'une sous-porteuse, sur laquelle un CRS est situé, dans un même groupe de bandes de fréquences est utilisée pour effectuer une interpolation et une estimation sur une sous-porteuse non-CRS dans le même groupe de bandes de fréquences, dans lequel, avant la réception de CRS qui sont envoyés par une station de base en utilisant au moins deux ports d'antenne, comprenant en outre de :
recevoir des informations de division en groupes de bandes de fréquences envoyées par la station de base, dans lequel les informations de division en groupes de bandes de fréquences indiquent que la largeur de bande occupée par les CRS est divisée en au moins deux groupes de bandes de fréquences ; et
l'exécution séparément d'une estimation de canal indépendante dans chacun des au moins deux groupes de bandes de fréquences comprend de :
effectuer séparément une estimation de canal indépendante dans chacun des au moins deux groupes de bandes de fréquences en fonction des informations de division en groupes de bandes de fréquences.

2. Procédé selon la revendication 1, dans lequel les informations de division en groupes de bandes de fréquences sont transportées sur un canal de diffusion physique, PBCH, et des blocs de ressources, RB, occupés par le PBCH sont divisés en un même groupe de bandes de fréquences lors de la division en groupes de bandes de fréquences.

3. Procédé selon l'une quelconque des revendications 1 et 2, dans lequel la bande de fréquences comprend N sous-bandes, où N est un entier positif.

4. Procédé de traitement d'estimation de canal, comprenant de :
envoyer des signaux de référence spécifiques aux cellules, CRS, à un terminal en utilisant au moins deux ports d'antenne, de sorte que le terminal effectue séparément une estimation de canal indépendante dans chacun des au moins deux groupes de bandes de fréquences, dans lequel
la largeur de bande occupée par les CRS est divisée en les au moins deux groupes de bandes de fréquences, un groupe de bandes de fréquences correspond à un port d'antenne, et chaque groupe de bandes de fréquences comprend au moins une bande de fréquences, et avant l'envoi de signaux de référence spécifiques aux cellules, CRS, à un terminal en utilisant au moins deux ports d'antenne, comprenant en outre de : envoyer des informations de division en groupes de bandes de fréquences au terminal, dans lequel les informations de division en groupes de bandes de fréquences indiquent que la largeur de bande occupée par les signaux de référence spécifiques aux cellules, CRS, est divisée en au moins deux groupes de bandes de fréquences, de sorte que le terminal effectue séparément une estimation de canal indépendante dans chacun des au moins deux groupes de bandes de fréquences en fonction des informations de division en groupes de bandes de fréquences.

5. Procédé selon la revendication 4, dans lequel les informations de division en groupes de bandes de fréquences sont transportées sur un canal de diffusion physique, PBCH, et des blocs de ressources, RB, occupés par le PBCH sont divisés en un même groupe de bandes de fréquences lors de la division en groupes de bandes de fréquences.

6. Procédé selon l'une quelconque des revendications 4 et 5, dans lequel la bande de fréquences comprend N sous-bandes, où N est un entier positif.

7. Terminal, comprenant :
un module de réception (401), configuré pour recevoir des signaux de référence spécifiques aux cellules, CRS, qui sont envoyés par une station de base en utilisant au moins deux ports d'antenne, dans lequel la largeur de bande occupée par les CRS est divisée en au moins deux groupes de bandes de fréquences, un groupe de bandes de fréquences correspond à un port d'antenne, et chaque groupe de bandes de fréquences comprend au moins une bande de fréquences ; et
un module d'estimation de canal (402), configuré pour effectuer séparément une estimation de canal indépendante dans chacun des au moins deux groupes de bandes de fréquences en fonction des CRS reçus par le module de réception, dans lequel le module d'estimation de canal (402) est en outre configuré pour effectuer une interpolation de canal dans chacun des au moins deux groupes de bandes de fréquences, dans lequel l'exécution de l'interpolation de canal dans chacun des au moins deux groupes bandes de fréquences comprend de : lorsque l'estimation de canal est effectuée sur une sous-porteuse non-CRS en interpolant des sous-porteuses sur lesquelles les CRS sont situés, une valeur d'estimation de canal d'une sous-porteuse, sur laquelle un CRS est situé, dans un même groupe de bandes de fréquences est utilisée pour effectuer une interpolation et une estimation sur une sous-porteuse non-CRS dans le même groupe de bandes de fréquences, dans lequel le module de réception (401) est en outre configuré pour :
recevoir des informations de division en groupes de bandes de fréquences envoyées par la station de base, dans lequel les informations de division en groupes de bandes de fréquences indiquent que la largeur de bande occupée par les CRS est divisée en au moins deux groupes de bandes de fréquences, de sorte que le module d'estimation de canal effectue séparément une estimation de canal indépendante dans chacun des au moins deux groupes de bandes de fréquences en fonction des informations de division en groupes de bandes de fréquences.

8. Terminal selon la revendication 7, dans lequel les informations de division en groupes de bandes de fréquences sont transportées sur un canal de diffusion physique, PBCH, et des blocs de ressources, RB, occupés par le PBCH sont divisés en un même groupe de bandes de fréquences lors de la division en bandes de fréquences.

9. Terminal selon l'une quelconque des revendications 7 et 8, dans lequel la bande de fréquences comprend N sous-bandes, où N est un entier positif.

10. Station de base, comprenant :
un module d'envoi (501), configuré pour envoyer des signaux de référence spécifiques aux cellules, CRS, à un terminal en utilisant au moins deux ports d'antenne, de sorte que le terminal effectue séparément une estimation de canal indépendante dans chacun d'au moins deux groupes de bandes de fréquences, dans lequel la largeur de bande occupée par les CRS est divisée en au moins deux groupes de bandes de fréquences, un groupe de bandes de fréquences correspond à un port d'antenne, et chaque groupe de bandes de fréquences comprend au moins une bande de fréquences, dans lequel le module d'envoi (501) est en outre configuré pour : envoyer des informations de division en groupes de bandes de fréquences au terminal, dans lequel les informations de division en groupes de bandes de fréquences indiquent que la largeur de bande occupée par les signaux de référence spécifiques aux cellules, CRS, est divisée en au moins deux groupes de bandes de fréquences, de sorte que le terminal effectue séparément une estimation de canal indépendante dans chacun des au moins deux groupes de bandes de fréquences en fonction des informations de division en groupes de bandes de fréquences.

11. Station de base selon la revendication 10, dans laquelle les informations de division en groupes de bandes de fréquences sont transportées sur un canal de diffusion physique, PBCH, et des blocs de ressources, RB, occupés par le PBCH sont divisés en un même groupe de bandes de fréquences lors de la division en groupes de bandes de fréquences.

12. Station de base selon l'une quelconque des revendications 10 et 11, dans laquelle la bande de fréquences comprend N sous-bandes, où N est un entier positif.
